# EUROPEAN PATENT APPLICATION

(11) **EP 2 339 714 A2**
(43) Date of publication of application: **29.06.2011**
(21) Application number: 10252218.2
(22) Date of filing: 23.12.2010
(51) Int. Cl.: H02J 3/38, H02J 7/35, H02J 9/06

(54) **Energy storage system and method of controlling the same**

(30) Priority: 23.12.2009 KR 20090130023
(71) Applicant: Samsung SDI Co., Ltd., Gyeonggi-do (KR)
(72) Inventor: Lee, Eun-Ra, Gyeonggi-do (KR)
(74) Representative: Mounteney, Simon James

(57) **Abstract**

A grid-connected energy storage system (100) operates in accordance with a priority order of loads (150) for utilization of power stored in a battery (120) at improved efficiency even in case of an abnormal operation of a grid (140).

## Description

### BACKGROUND

### 1. Field

The present invention relates to an energy storage system and a method of controlling the same.

### 2. Description of the Related Art

Due to problems like environmental destruction and depletion of natural resources, systems for storing electricity and effectively utilizing the stored electricity are attracting more attention than before. Furthermore, the importance of new renewable energies, such as photovoltaic electricity, is increasing. Especially, since renewable energies are derived from virtually inexhaustible natural resources, such as sunlight, wind, and tides, and do not create pollutions during energy consumption, methods of utilizing renewable energies are being actively researched and developed.

By applying information technology to a conventional power grid, it can become a smart grid system that improves or optimizes energy efficiency by exchanging information between a power supplier and a consumer.

Furthermore, a photovoltaic system, in which photovoltaic technology and an uninterruptible power supply (UPS) are connected, has been introduced.

### SUMMARY

One or more embodiments of the present invention are directed to an energy storage system and a method of controlling the same for utilizing power stored in a battery at improved efficiency even in case of an abnormal operation of a grid (e.g., power interruption).

Additional aspects of embodiments according to the present invention will be set forth in part in the description which follows and, in part, will be apparent from the description.

According to one or more embodiments of the present invention, an energy storage system includes a maximum power point tracking (MPPT) converter for converting power generated by a renewable energy generating system and outputting the converted power to a first node; a bi-directional inverter coupled between the first node and a second node, a grid and a load being coupled to the second node, the bi-directional inverter for converting a first power input via the first node to a second power and outputting the converted second power to the second node, and converting power provided by the grid to the first power and outputting the converted first power to the first node; a battery for storing a third power; a bi-directional converter coupled between the battery and the first node, the bi-directional converter for converting the third power output by the battery to the first power and outputting the converted first power to the bi-directional inverter via the first node, and converting the first power output by the bi-directional inverter via the first node to the third power and storing the converted third power in the battery; and an integrated controller for providing the third power to the load based on a priority order.

The integrated controller may be configured to provide the third power stored in the battery to the load based on an amount of the third power stored in the battery and the priority order of the load.

The integrated controller may be configured to selectively provide the third power to the load based on the priority order of the load, if a power interruption signal is received.

The energy storage system may further include a first switch coupled between the bi-directional inverter and the load; and a second switch coupled between the second node and the grid.

The integrated controller may be configured to turn off the second switch when the power interruption signal is received.

The load may include at least two loads, and the energy storage system may further include at least two switches coupled between the second node and the at least two loads, the at least two switches for controlling power to be provided to the at least two loads, respectively, wherein the integrated controller is configured to control the at least two switches based on an amount of the third power stored in the battery and a priority order of the at least two loads.

The integrated controller may further include a monitor for monitoring an amount of the third power stored in the battery; a user setup unit for setting up the priority order of the at least two loads; a computer for determining the amount of the third power stored in the battery and the priority order of the at least two loads; and a control signal generator for generating control signals for selectively providing the third power stored in the battery to the at least two loads under the control of the computer.

The energy storage system may further include a battery management system (BMS) for managing charging/discharging the third power stored in the battery under the control of the integrated controller, wherein the integrated controller further includes a BMS controller for controlling the BMS.

The energy storage system may further include a DC linking unit for maintaining a voltage level of a DC voltage of the first node at a DC linking level.

The renewable energy generating system may include a photovoltaic system.

According to one or more embodiments of the present invention, an energy storage system includes a first power converter for converting power generated by a renewable energy generating system to a first power; a second power converter for converting the first power to a second power and storing the second power in a battery and for converting the second power stored in the battery to the first power; a third power converter for converting the first power and outputting the converted first power to a load or a grid and for converting power provided by the grid to the first power; and an integrated controller for controlling the first through third power converters, so that power is selectively provided to the load based on an amount of the second power stored in the battery and a priority order of the load.

According to one or more embodiments of the present invention, a method of controlling an energy storage system coupled to a renewable energy generating system, a load, and a grid, the energy storage system including a maximum power point tracking (MPPT) converter for converting a first power generated by a renewable energy generating system and outputting the converted first power to a first node; a battery for storing the first power generated by the renewable energy generating system or a second power provided by the grid; a bi-directional inverter for converting the first power of the first node, for outputting the converted first power to the load or the grid, and for converting the second power provided by the grid and outputting the converted second power to the first node; a bi-directional converter for converting the first power of the first node, for storing the converted first power in the battery, and for converting a third power stored in the battery and outputting the converted third power to the first node; and an integrated controller.

The method includes determining whether or not an amount of the third power stored in the battery is above a first critical power amount; providing power to the load regardless of a priority order of the load in the case where the amount of the third power stored in the battery is above the first critical power amount and determining the priority order of the load in the case where the amount of the third power stored in the battery is less than the first critical power amount; and selectively providing power to the load based on the determined priority order of the load.

The method may further include setting up the priority order, so that the load is categorized into first, second, and third priority loads.

Said selectively providing power to the load may include providing power to the first and second priority loads.

The method may further include receiving a power interruption signal, which indicates a power interruption in the grid, wherein, when the power interruption signal is received, the amount of the third power stored in the battery is determined.

The method may further include determining whether or not the amount of third power stored in the battery is above a second critical power amount, wherein, when the amount of third power stored in the battery is less than the second critical power amount, power is provided only to the first priority load.

The method may further include determining whether or not the amount of the third power stored in the battery is above a third critical power amount, wherein, when the amount of the third power stored in the battery is less than the third critical power amount, power provided to the load is blocked.

The method may further include turning off a switch coupled between the energy storage system and the grid when the power interruption signal is received.

The renewable energy generating system is photovoltaic.

The method further includes stabilizing a voltage level of the first node to a DC linking level.At least some of the above and other features of the invention are set-out in the appended claims.

### BRIEF DESCRIPTION OF THE DRAWINGS

These and/or other aspects of the present invention will become apparent and more readily appreciated from the following description of the embodiments, taken in conjunction with the accompanying drawings of which:

FIG. 1 is a block diagram of a grid-connected energy storage system according to an embodiment of the present invention;

FIG. 2 is a flowchart of power and control signals of the grid-connected energy storage system shown in FIG. 1;

FIG. 3 is a diagram for describing an embodiment in which the integrated controller of FIG. 1 selectively provides power based on the priority order of loads;

FIG. 4 is a block diagram of the integrated controller shown in FIG. 1; and

FIG. 5 is a flowchart for describing a method of controlling an energy storage system according to another embodiment of the present invention.

### DETAILED DESCRIPTION

Reference will now be made in detail to embodiments, examples of which are illustrated in the accompanying drawings, wherein like reference numerals refer to like elements throughout. In this regard, the described embodiments may have different forms and should not be construed as being limited to the descriptions set forth herein. Accordingly, the embodiments are merely described below, by referring to the figures, to explain aspects of the present invention.

In the description of embodiments of the present invention, commonly-used technologies or structures related to the embodiments may be omitted.

Also, the terms of the specification shall be interpreted based on the content of the entire specification.

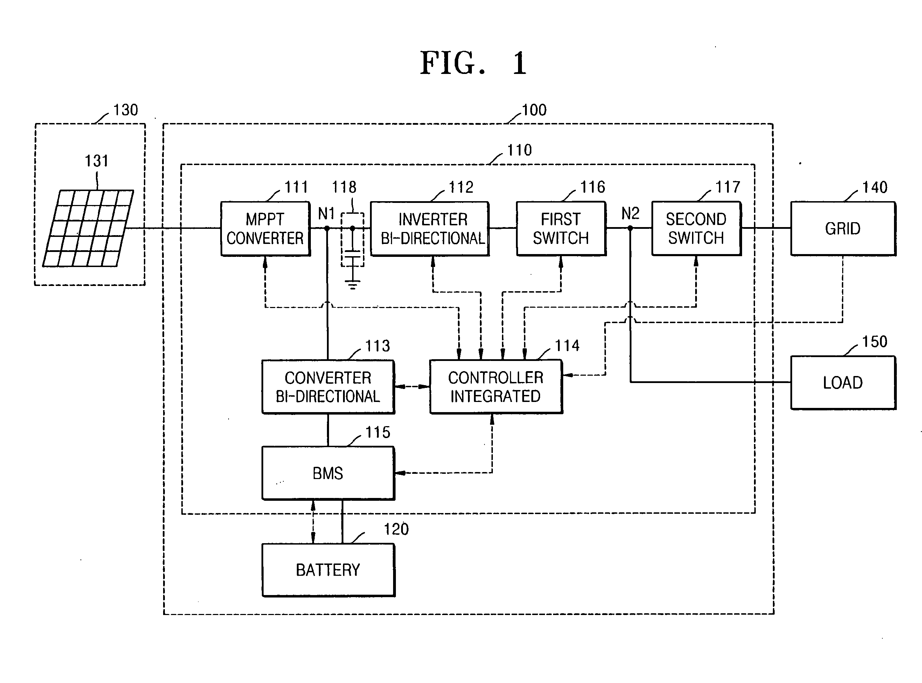

FIG. 1 is a block diagram of a grid-connected energy storage system 100 according to an embodiment of the present invention.

Referring to FIG. 1, a power management system 110 includes a maximum power point tracking (referred to hereinafter as "MPPT") converter 111, a bi-directional inverter 112, a bi-directional converter 113, an integrated controller 114, a battery management system (referred to hereinafter as "BMS") 115, a first switch 116, a second switch 117, and a DC linking unit 118. The power management system 110 is connected to a battery 120, a photovoltaic source (referred to hereinafter as 'PV') 130, a grid 140, and a load 150. Although the grid-connected energy storage system 100 includes the power management system 110 and the battery 120 in the embodiment of FIG. 1, the present invention is not limited thereto, and the grid-connected energy storage system 100 may be a power management system or a grid-connected energy storage system, in which the power management system 110 and the battery 120 are integrated. Furthermore, although this embodiment includes integrated controller 114, other embodiments may employ alternative kinds of controller.

Although the embodiment of FIG. 1 is described with respect to the PV 130, the present invention is not limited thereto, and the PV 130 may be replaced with any of various renewable energy generating systems. The PV 130 generates electric energy and outputs the electric energy to the power management system 110. Here, the renewable energy generating system may also be a wind power generating system, a tidal power generating system, or any of various systems generating electric energy from renewable energies such as solar power or geothermal power. For example, a solar cell, which generates electric energy from sunlight, may easily be installed in households and factories, and thus a solar cell is suitable for the grid-connected energy storage system 100 which may be distributed to households.

The grid 140 includes power plants, substations, and power lines. The grid 140 supplies power to the battery 120 or the load 150 according to ON/OFF states of the first switch 116 and the second switch 117 during normal operation of the grid 140, and receives power supplied from the PV 130 or the battery 120. When the grid 140 does not operate normally (e.g., accidental power interruption or power interruption due to electric works), power supplied from the grid 140 to the battery 120 or the load 150 ceases, and power supplied from the PV 130 or the battery 120 to the grid 140 also ceases.

The load 150 consumes power generated by the PV 130, power stored in the battery 120, or power supplied by the grid 140, and the load 150 may be an electrical load of a household or a factory.

The MPPT converter 111 converts a DC voltage output by the solar cell 131 to a DC voltage to be transmitted to a first node N1, and, since output of the solar cell 131 is affected by temperature variations (e.g., solar flux and temperature) and load conditions, the MPPT converter 111 controls the solar cell 131 to generate power at maximum efficiency. In other words, the MPPT converter 111 functions as both a boost (or step-up) DC-DC converter, which boosts DC voltage output by the solar cell 131, and an MPPT controller. For example, DC voltage output by the MPPT converter 111 may be from about 300 V to about 600 V. Furthermore, the MPPT converter 111 functions as the MPPT controller to track a voltage of the maximum power output by the solar cell 131 according to variations of solar flux and temperature. For example, the MPPT converter 111 may perform a perturbation and observation (P&O) control method, an incremental conductance (IncCond) control method, or a power-to-voltage control method. The P&O control method is a method of measuring power and voltage of a solar cell while increasing or decreasing a reference voltage based on the measurement. The IncCond control method is a method of controlling a solar cell based on comparison of output conductance of the solar cell and incremental conductance. The power-to-voltage control method is a method of controlling a solar cell based on a slope of a graph representing the power-to-voltage relationship. Furthermore, any suitable MPPT control methods other than the control methods described above may be performed.

The DC linking unit 118 is interconnected between the first node N1 and the bi-directional inverter 112. The DC linking unit 118 maintains a DC voltage output by the MPPT converter 111 as a DC linking voltage (e.g., a DC voltage of 380 V) and provides the DC linking voltage to the bi-directional inverter 112 or the bi-directional converter 113. Here, the DC linking unit 118 may be an aluminum electrolytic capacitor, a polymer capacitor, or a multi layer ceramic capacitor (MLCC), or other suitable capacitors. The voltage level of the first node N1 may become unstable due to variations in DC voltage output by the solar cell 131, instantaneous or momentary voltage sag of the grid 140, or peak load at the load 150. Therefore, with the DC linking unit 118, a stable DC linking voltage may be provided for normal operations of the bi-directional converter 113 and the bi-directional inverter 112.

Although the DC linking unit 118 is shown as an independent component in the embodiment shown in FIG. 1, the DC linking unit 118 may be integrated in the bi-directional converter 113, the bi-directional inverter 112, or the MPPT converter 111.

The bi-directional inverter 112 is interconnected between the first node N1 and the grid 140. The bi-directional inverter 112 converts a DC voltage output by the MPPT converter 111 and a DC voltage output by the bi-directional converter 113 to an AC voltage to be provided to the grid 140 or the load 150, converts an AC voltage provided by the grid 140 to a DC voltage, and transmits the DC voltage to the first node N1. In other words, the bi-directional inverter 112 functions as an inverter for converting a DC voltage to an AC voltage and a rectifier for converting an AC voltage to a DC voltage.

The bi-directional inverter 112 rectifies an AC voltage input from the grid 140 via the first switch 116 and the second switch 117 to a DC voltage to be stored in the battery 120 and outputs the DC voltage, and converts a DC voltage output by the battery 120 to an AC voltage to be provided to the grid 140 and outputs the AC voltage. Here, the AC voltage output to the grid 140 should meet the power quality standards of the grid 140 (e.g., power ratio above 0.9 and THN within 5%). To meet the standards, the bi-directional inverter 112 reduces invalid power generation by synchronizing the phase of an output AC voltage with the phase of the grid 140. Furthermore, the bi-directional inverter 112 may include a filter to remove high frequencies from an AC voltage output to the grid 140, and may perform various functions, such as limiting a range of voltage variation, improving a power ratio, removing DC components, and protecting from transient phenomena. The bi-directional inverter 112 according to an embodiment of the present invention functions as an inverter for converting a DC voltage of a power generating system or the battery 120 to an AC voltage to be provided to the grid 140 or the load 150, and functions as a rectifier for converting an AC voltage provided by the grid 140 to a DC voltage to be provided to the battery 120.

The bi-directional converter 113 is interconnected between the first node N1 and the battery 120, and converts a DC voltage of the first node N1 to a DC voltage to be stored in the battery 120. Furthermore, the bi-directional converter 113 converts a DC voltage stored in the battery 120 to a DC voltage to be transmitted to the first node N1. For example, in a battery charging mode where the battery 120 is charged with DC power generated by the PV 130, the bi-directional converter 113 functions as a converter which decreases the voltage level of a DC voltage of the first node N1 or the voltage level of a DC linking voltage maintained by the DC linking unit 118 (e.g., DC 380V) to the voltage level of a voltage to be stored in the battery 120 (e.g., DC 100V). Furthermore, in a battery discharging mode where power stored in the battery 120 is provided to the grid 140 or the load 150, the bi-directional converter 113 functions as a converter which boosts the voltage level of a voltage stored in the battery 120 (e.g., DC 100 V) to the voltage level of a DC voltage of the first node N1 or the voltage level of a DC linking voltage (e.g., DC 380 V). The bi-directional converter 113 according to an embodiment of the present invention converts DC power generated by the PV 130 or DC power converted from AC power provided by the grid 140 to DC power to be stored in the battery 120, and converts DC power stored in the battery 120 to DC power to be input to the bi-directional inverter 112, so that the DC power may be provided to the grid 140 or the load 150.

The battery 120 stores power provided by the PV 130 or the grid 140. The battery 120 may include a plurality of battery cells connected in series or in parallel for increased capacity and power output. Operations of charging and discharging the battery 120 are controlled by the BMS 115 or the integrated controller 114. The battery 120 may include various types of battery cells such as nickel-cadmium (NiCd) battery cells, lead acid battery cells, nickel metal hydride (NiMH) battery cells, lithium ion battery cells, and/or lithium polymer battery cells. A number of battery cells constituting the battery 120 may be determined based on desired power capacity or schematic conditions of the grid-connected energy storage system 100.

The BMS 115 is connected to the battery 220 and controls operations of charging and discharging the battery 120 based on instructions from the integrated controller 114. Both discharging power from the battery 120 to the bi-directional converter 113 and charging power from the bi-directional converter 113 to the battery 120 are transmitted via the BMS 115. Furthermore, the BMS 115 may perform various functions to protect the battery 120, the functions including overcharging protection, over-discharging protection, excessive current protection, overheating protection, and cell balancing. Thus, the BMS 115 may detect voltage, current, and temperature of the battery 120, calculate a state of charge (referred to hereinafter as "SOC") and a state of health (referred to hereinafter as "SOH") based on the detected information, and monitor the remaining power and lifespan of the battery 120.

The BMS 115 may include one or more sensors for detecting voltage, current, and temperature of the battery 120, a microcomputer for determining overcharge, over-discharge, excessive current, cell balance, the SOC, and the SOH based on information detected by the one or more sensors, and a protective circuit for performing various functions, such as charge/discharge prohibition, fuse tripping, and cooling under the control of the microcomputer. Here, the BMS 115 is integrated in the power management system 110 and is separate from the battery 120, as shown in FIG. 1. However, the present invention is not limited thereto, and the BMS 115 and the battery 120 may be integrated in a single battery pack. Furthermore, the BMS 115 controls operations of charging and discharging the battery 120 under the control of the integrated controller 114, and transmits information regarding the state of the battery 120 (e.g., the amount of charged power calculated based on the SOC) to the integrated controller 114.

The first switch 116 is interconnected between the bi-directional inverter 112 and a second node N2. The second switch 117 is interconnected between the second node N2 and the grid 140. The first switch 116 and the second switch 117 may be a switch turned on or off under the control of the integrated controller 114. The first switch 116 and the second switch 117 control (e.g., allow or block) the flow of power provided from the PV 130 or the battery 120 to the grid 140 or the load 150, and control (e.g., allow or block) the flow of power provided from the grid 140 to the load 150 or the battery 120. For example, the integrated controller 114 turns on the first and second switches 116 and 117 in the case where power generated by the PV 130 or power stored in the battery 120 is provided to the grid 140, whereas the integrated controller 114 turns on only the first switch 116 and turns off the second switch 117 in the case where power is provided only to the load 150. Furthermore,.in the case where power of the grid 140 is provided only to the load, the integrated controller 114 turns off the first switch 116 and turns on the second switch 117.

When the grid 140 does not operate normally (e.g., power interruption or service wiring problem), the second switch 117 blocks power to be provided to the grid 140 such that the energy storage system 100 performs a unilateral operation of an energy storage system. Here, the integrated controller 114 separates the power management system 110 from the grid 140 while it maintains tracking of the grid 140, to prevent a close-range accident from occurring (e.g., a repairman gets an electric shock), and to prevent the grid 140 from adversely affecting electric installations due to its abnormal operation. Furthermore, in the case of the unilateral operation of an energy storage system when the grid 140 operates abnormally, when the grid 140 is recovered from the abnormal condition and power generated by the PV 130 or power (or energy) stored in the battery 120 is provided to the load 150, a phase difference occurs between a voltage of the grid 140 and a voltage output by the battery 120, which has been operating unilaterally, and thus the power management system 110 may be damaged. Therefore, the integrated controller 114 performs unilateral operation controls to prevent the above described problems.

The integrated controller 114 controls overall operations of the power management system 110 or the energy storage system 100. According to an embodiment of the present invention, the integrated controller 114 detects a power interruption signal of the grid 140, and, in the case where a power interruption signal is received, performs control operations for transmitting DC power stored in the battery 120 to the load 150. In this case, in order to provide power stored in the battery 120 to the load 150, the integrated controller 114 turns off the bi-directional inverter 112 and the MPPT converter 111, turns on the bi-directional converter 113, performs constant voltage control on a voltage of the first node N1 by using power stored in the battery 120, and provides power to the load 150 by turning on the bi-directional inverter 112. Furthermore, in the case where the PV 130 may be operated, the integrated controller 114 may selectively operate the MPPT converter 111 so as to gradually provide power generated by the PV 130 to the load 150 together with the power stored in the battery 120.

According to an embodiment of the present invention, the integrated controller 114 may selectively provide power to a plurality of loads based on priorities designated to the loads and the amount of power stored in the battery 120. For example, in the case where sufficient power is charged to the battery 120, the integrated controller 114 provides power to all the loads. In the case where power charged to the battery 120 is approximately half of the entire capacity of the battery 120, the integrated controller 114 provides power to only a first priority load and a second priority load. In the case where power charged to the battery 120 is less than one half of the entire capacity of the battery 120, the integrated controller 114 provides power to only the first priority load. In the case where power charged to the battery 120 is minimal, the integrated controller 114 blocks power from being provided to all the loads. Here, a first priority load may include devices to which power should be constantly provided even during power interruption or when power is not sufficiently provided, such as essential consumer electronics (e.g., a refrigerator). A second priority load may be a TV or a lighting device, and a third priority load may be optional electronics, such as an audio device. However, priority orders of the loads are not limited thereto, and a user may set up other priority orders (e.g., a random priority order).

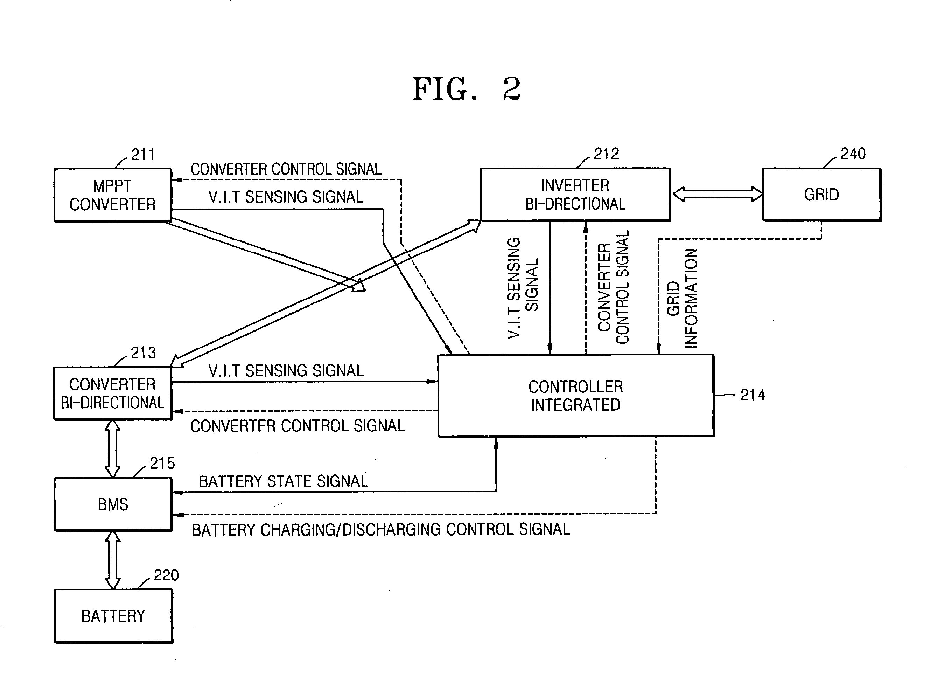

FIG. 2 is a flowchart of power and control signals of the grid-connected energy storage system 100 shown in FIG. 1.

FIG. 2 shows power flows and flows of control of the integrated controller 114 among the internal components of the grid-connected energy storage system 100 shown in FIG. 1. As shown in FIG. 2, a DC voltage converted by the MPPT converter 111 is provided to the bi-directional inverter 112 and the bi-directional converter 113. The DC voltage is either converted to an AC voltage and is provided to the grid 140 by the bi-directional inverter 112, or converted to a DC voltage to be stored in the battery 120 and is provided to the battery 120 via the BMS 115 by the bi-directional converter 113. The DC voltage stored in the battery 120 is converted to a DC voltage to be input to the bi-directional inverter 112 by the bi-directional converter 113, and the converted DC voltage is converted to an AC voltage to meet the standards of the grid 140 and is provided to the grid 140 by the bi-directional inverter 112.

The integrated controller 114 controls overall operations of the grid-connected energy storage system 100, and determines an operation mode of the grid-connected energy storage system 100. In other words, the integrated controller 114 determines whether or not to provide generated power to the grid 140, whether or not to provide the generated power to a load, whether or not to store the generated power in the battery 120, whether or not to store power provided by the grid 140 in the battery 120, etc.

The integrated controller 114 transmits control signals to each of the MPPT converter 111, the bi-directional inverter 112, and the bi-directional converter 113 for controlling operations (e.g., switching operations) of each of the MPPT converter 111, the bi-directional inverter 112, and the bi-directional converter 113. Here, the control signals may reduce or minimize power loss due to power conversion of a converter or an inverter by performing optimal duty ratio control based on voltages input to each of the converter or inverter. Thus, the integrated controller 114 receives detection signals, which are information obtained by detecting voltage, current, and temperature of input terminals of each of the MPPT converter 111, the bi-directional inverter 112, and the bi-directional converter 113, and transmits converter control signals and inverter control signals based on the detection signals.

Further, the integrated controller 114 receives grid information, which includes state information of the grid (e.g., information regarding voltage, current, and temperature of the grid) from the grid 140. Based on the grid information, the integrated controller 114 determines an operation state of the grid 140 and whether to execute power recovery of the grid 140, and prevents unilateral operation of the grid 140 by blocking power from being provided to the grid 140 and matching the output of the bi-directional inverter 112 and power provided to the grid 140 after power recovery.

The integrated controller 114 communicates with the BMS 115, receives a battery state signal such as a battery charging/discharging state signal, and determines an operation mode of the entire system based on the battery charging/discharging state signal. Furthermore, based on an operation mode, the integrated controller 114 transmits a battery charging/discharging state signal to the BMS 115, and the BMS 115 controls charging/discharging of the battery 120 based on the battery charging/discharging state signal.

According to an embodiment of the present invention, the integrated controller 114 may selectively provide power to loads 150 based on priorities designated to the loads and the amount of power stored in the battery 120. Therefore, before power stored in the battery 120 is completely discharged, the integrated controller 114 may separate loads with higher priorities among the loads 150 and may preferentially provide power thereto.

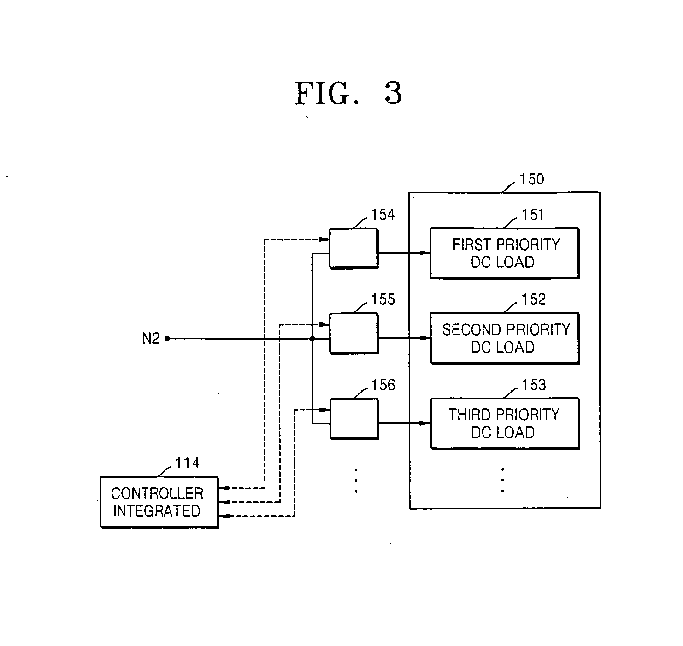

FIG. 3 is a diagram for describing an embodiment in which the integrated controller 114 selectively provides power based on the priority order of the loads 150.

Referring to FIG. 3, a load 150 connected to a second node N2 is shown, and the load 150 includes a first priority load 151, a second priority load 152, and a third priority load 153. Here, the first priority load 151 includes devices to which power should be constantly provided even during power interruption or when power is not sufficiently provided, such as essential consumer electronics or appliances (e.g., a refrigerator). The second priority load 152 may be a TV or a lighting device, and the third priority load 153 may be selective or optional electronics, such as an audio device. However, priority orders of the loads are not limited thereto, and a user may set up a different (e.g., a random) priority order. Switches 154, 155, and 156 are respectively interconnected between the second node N2 and each of the loads 151 through 153, and each of the switches 154 through 156 selectively provides power to the first through third priority loads 151 through 153 under the control of the integrated controller 114. In other words, each of the switches 154 through 156 is turned on/off by the integrated controller 114 and controls power provided to the first through third priority loads 151 through 153.

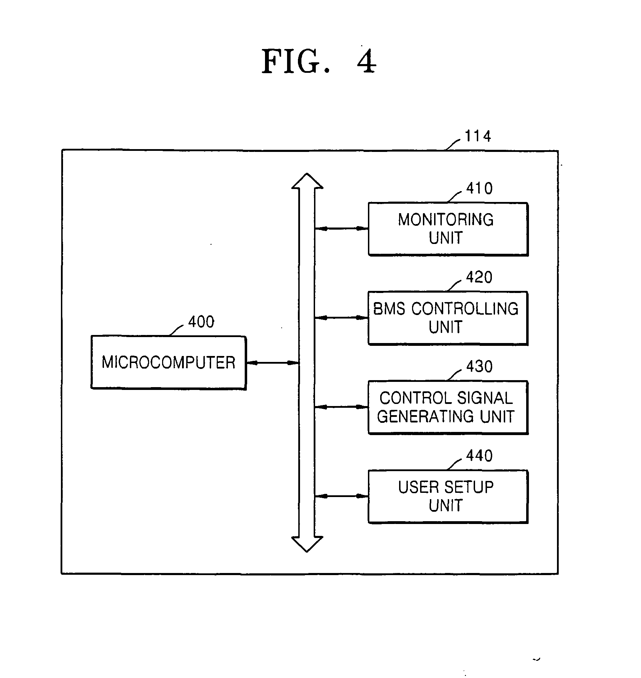

FIG. 4 is a block diagram of the integrated controller 114 shown in FIG. 1.

Referring to FIG. 4, the integrated controller 114 includes a microcomputer 400, a monitoring unit 410, a BMS controlling unit 420, a control signal generating unit 430, and a user setup unit 440.

The microcomputer 400 controls the overall operations of the integrated controller 114. The monitoring unit 410 monitors the amount of power stored in the battery 120. Furthermore, the monitoring unit 410 detects the state of the grid 140 and receives a power interruption signal. The monitoring unit 410 detects not only the state of the grid 140, but also voltages, currents, and temperatures of the MPPT converter 111, the bi-directional inverter 112, and the bi-directional converter 113, and monitors states of the battery 120 such as voltage, current, charging/discharging state, lifespan, etc.

The BMS controlling unit 420 communicates with the BMS 115 (shown in FIG. 1) and controls operations of charging/discharging the battery 120. According to an embodiment of the present invention, the BMS controlling unit 420 controls the operation of discharging power stored in the battery 120 in case of a power interruption.

The control signal generating unit 430 generates control signals for providing power according to the priority order of the load 150 under the control of the microcomputer 400. In other words, the control signal generating unit 430 generates control signals for turning on/off the switches 154 through 156 (shown in FIG. 3) respectively connected to each of the loads 151 through 153 (shown in FIG. 3). Furthermore, the control signal generating unit 430 generates control signals for turning on/off the MPPT converter 111, the bi-directional inverter 112, and the bi-directional converter 113.

The user setup unit 440 sets up the priority order of the load 150 based on user selection. In other words, the user setup unit 440 designates a first priority load, a second priority load, and a third priority load.

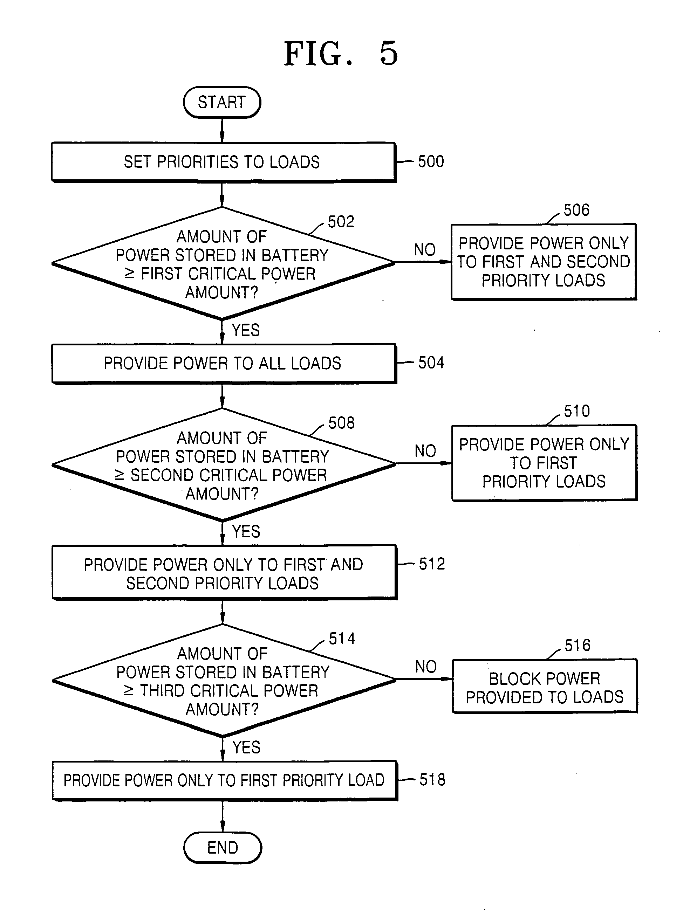

FIG. 5 is a flowchart for describing a method of controlling an energy storage system according to another embodiment of the present invention.

Referring to FIG. 5, in operation 500, a priority order of loads is set. Here, the priority order may be randomly set by a user. In an operation 502, it is determined whether or not an amount of power stored in a battery is above a first critical power amount. In the case where the amount of power stored in the battery is above the first critical power amount, power is provided to all loads regardless of the priority order (operation 504). In the case (operation 506) where the amount of power stored in the battery is less than the first critical power amount, power is provided to a first priority load and a second priority load, and power provided to a third priority load is blocked. For example, in the case where power charged to a battery is above 90% of the entire capacity of the battery, the switches 154 through 156 are turned on to provide power to all DC loads. In the case where power charged to the battery is below 90% of the entire capacity of the battery, only the switches 154 through 155 are turned on, and the switch 156 is turned off to block power provided to the third priority load.

In an operation 508, it is determined whether or not the amount of power stored in the battery is above a second critical power amount. In the case where the amount of power stored in the battery is above the second critical power amount, power is provided only to the first priority load and the second priority load (operation 512). In the case where the amount of power stored in the battery is less than the second critical power amount, power is provided only to the first priority load (operation 510). For example, in the case where power charged to the battery is below 50% of the entire capacity of the battery, only the switch 154 is turned on and the other switches 155 through 156 are turned off, so that power is provided to the first priority load, and power provided to the second and third priority loads is blocked.

In an operation 514, it is determined whether or not the amount of power stored in the battery is above a third critical power amount. In the case where the amount of power stored in the battery is above the third critical power amount, power is provided only to the first priority load (operation 518). In the case where the amount of power stored in the battery is less than the third critical power amount, power provided to all loads are blocked. For example, in the case where power charged to the battery is below 10% of the entire capacity of the battery, power provided to all loads are blocked to prevent the battery from being completely discharged. Therefore, the grid-connected energy storage system 100 may operate stably. Accordingly, by selectively providing power to loads, for which a priority order is set up, based on remaining power of a battery, power may be provided to a load, which is preferentially desired by a user, for a longer period of time, and thus efficiency of energy usage may be improved.

As described above, according to one or more of the above embodiments of the present invention, an energy storage system according to an embodiment of the present invention may utilize power stored in a battery at improved efficiency even in case of power interruption.

It should be understood that the embodiments described herein should be considered in a descriptive sense only and not for purposes of limitation. The invention also includes various modifications and equivalent arrangements within the scope of the appended claims and their equivalents. Descriptions of features or aspects within each embodiment should typically be considered as available for other similar features or aspects in other embodiments.

## Claims

1. An energy storage system comprising:
a first power converter for converting power generated by a renewable energy generating system to a first power;
a second power converter for converting the first power to a second power for supply to a load or a grid and for converting power provided by the grid to the first power;
a third power converter for converting the first power to a third power for storage in a battery and for converting the third power stored in the battery to the first power; and
a controller adapted to control one or more of the first, second and third power converters, so that power is selectively provided to the load on the basis of a priority order of the load.

2. An energy storage system according to claim 1, wherein:
the first power converter is a maximum power point tracking (MPPT) converter that is adapted to output the first power to a first node;
the second power converter is a bi-directional inverter coupled between the first node and a second node, the said second node being coupled to the grid and the load, the bi-directional inverter being adapted to convert the first power received via the first node to the second power and output the second power to the second node, and convert power received via the second node to the first power and output the first power to the first node; and
the third power converter is a bi-directional converter coupled between the battery and the first node, the bi-directional converter being adapted to convert the third power output by the battery to the first power and output the first power to the bi-directional inverter via the first node, and convert the first power output by the bi-directional inverter via the first node to the third power and supply the third power to the battery.

3. An energy storage system according to claim 1 or 2, wherein the controller is adapted to provide the third power stored in the battery to the load based on an amount of the third power stored in the battery and the priority order of the load.

4. An energy storage system according to any preceding claim, wherein the controller is adapted to selectively provide the third power to the load on the basis of the priority order of the load when a power interruption signal is received by the energy storage system.

5. An energy storage system according to one of claims 2 to 4, further comprising:
a first switch between the bi-directional inverter and the load; and
a second switch between the second node and the grid.

6. An energy storage system according to claim 5, wherein the controller is adapted to turn off the second switch when the power interruption signal is received.

7. An energy storage system according to one of claims 2 to 6, wherein the load comprises at least two loads, and the energy storage system further comprises at least two third switches coupled between the second node and the at least two loads, each of the third switches being adapted to control power to be provided to a respective one of the at least two loads,
wherein the controller is configured to control the third switches based on an amount of the third power stored in the battery and a priority order of the at least two loads.

8. An energy storage system according to one of claims 2 to 6, wherein the load comprises at least two loads, and the controller comprises:
a monitor for monitoring an amount of the third power stored in the battery;
a user setup unit for setting up the priority order of the at least two loads;
a computer for determining the amount of the third power stored in the battery and the priority order of the at least two loads; and
a control signal generator for generating control signals for selectively providing the third power stored in the battery to the at least two loads under the control of the computer.

9. An energy storage system according to claim 8, further comprising a battery management system (BMS) for managing charging/discharging the third power stored in the battery under the control of the controller,
wherein the controller further comprises a BMS controller for controlling the BMS.

10. An energy storage system according to one of claims 2 to 9, further comprising a DC linking unit for maintaining a voltage level of a DC voltage of the first node at a DC linking level.

11. An energy storage system according to any preceding claim, wherein the renewable energy generating system comprises a photovoltaic system.

12. A method of controlling an energy storage system coupled to a renewable energy generating system, a load, and a grid; the energy storage system comprising
a first power converter for converting a power generated by the renewable energy generating system to a first power;
a second power converter for converting the first power to a second power for supply to the load or the grid, and for converting the second power provided by the grid to the first power;
a third power converter for converting the first power to a third power for storage in the battery, and for converting the third power stored in the battery to the first power; and
a controller;
the method comprising selectively providing power to the load based on a priority order of the load.

13. A method according to claim 12, comprising
determining whether or not an amount of the third power stored in the battery is above a first critical power amount;
providing power to the load regardless of a priority order of the load in the case where the amount of the third power stored in the battery is above the first critical power amount and determining the priority order of the load in the case where the amount of the third power stored in the battery is less than the first critical power amount; and
selectively providing power to the load on the basis of the determined priority order of the load.

14. A method according to claim 13, further comprising setting up the priority order, so that the load is categorized into first, second, and third priority loads,
wherein said selectively providing power to the load comprises providing power to the first and second priority loads.

15. A method according to claim 13 or 14 further comprising receiving a power interruption signal, which indicates a power interruption in the grid;
determining whether or not the amount of the third power stored in the battery is above a second critical power amount; and
determining whether or not the amount of the third power stored in the battery is above a third critical power amount,
wherein, when the power interruption signal is received, the amount of the third power stored in the battery is determined,
wherein, when the amount of the third power stored in the battery is less than the second critical power amount, power is provided only to the first priority load,
wherein, when the amount of the third power stored in the battery is less than the third critical power amount, power provided to the load is blocked.
